(19) Europäisches Patentamt
European Patent Office
Office européen des brevets

(11) **EP 2 545 409 B1**

(12) **FASCICULE DE BREVET EUROPEEN**

(45) Date de publication et mention
de la délivrance du brevet:
**02.10.2013 Bulletin 2013/40**

(21) Numéro de dépôt: **11706616.7**

(22) Date de dépôt: **07.03.2011**

(51) Int Cl.:
***G02F 1/137*** *(2006.01)*

(86) Numéro de dépôt international:
**PCT/EP2011/053392**

(87) Numéro de publication internationale:
**WO 2011/110526 (15.09.2011 Gazette 2011/37)**

(54) **MODULATEUR DE PHASE À BASE DE CRISTAL LIQUIDE À STRUCTURE HÉLICOÏDALE**

PHASENMODULATOR MIT EINEM FLÜSSIGKRISTALL MIT SPIRALFÖRMIGER STRUKTUR

PHASE MODULATOR CONTAINING A LIQUID CRYSTAL HAVING A HELICAL STRUCTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.03.2010 FR 1001004**

(43) Date de publication de la demande:
**16.01.2013 Bulletin 2013/03**

(73) Titulaire: **Commissariat à l'Énergie Atomique
et aux Énergies Alternatives
75015 Paris (FR)**

(72) Inventeurs:
• **ROSSINI, Umberto
F-38500 Coublevie (FR)**
• **MOUREY, Bruno
F-38500 Coublevie (FR)**

(74) Mandataire: **Esselin, Sophie et al
Marks & Clerk France
Conseils en Propriété Industrielle
Immeuble Visium
22, Avenue Aristide Briand
94117 Arcueil Cedex (FR)**

(56) Documents cités:
**EP-A1- 1 688 783        JP-A- 60 086 521
US-A1- 2007 139 586**

• **BAESSLER H ET AL: "Electric field effects on the
optical rotatory power of a compensated
cholesteric liquid crystal", JOURNAL OF
CHEMICAL PHYSICS, AMERICAN INSTITUTE OF
PHYSICS, NEW YORK, NY, US, vol. 51, no. 8, 15
octobre 1969 (1969-10-15), pages 3213-3219,
XP009140194, ISSN: 0021-9606**
• **YOUNG-CHOL YANG ET AL: "Theoretical study
on the homeotropic-transient planar transition of
cholesteric liquid crystals", JAPANESE
JOURNAL OF APPLIED PHYSICS, PART 1
(REGULAR PAPERS, SHORT NOTES & REVIEW
PAPERS) JAPAN SOC. APPL. PHYS. JAPAN, vol.
40, no. 2A, février 2001 (2001-02), pages 649-653,
XP002638239, ISSN: 0021-4922**

**Description**

Le domaine de l'invention est celui des dispositifs à base de cristaux liquides, trouvant des applications dans des dispositifs optiques tels que des lentilles, des correcteurs de front d'onde et ce pour être notamment intégrés dans des zooms optiques ou des caméras. De manière générale, des correcteurs de front d'onde peuvent également avantageusement être utilisés dans des dispositifs de laser de puissance afin de corriger des aberrations de faisceau laser et ce pour augmenter la qualité de focalisation dudit faisceau de puissance généré en sortie.

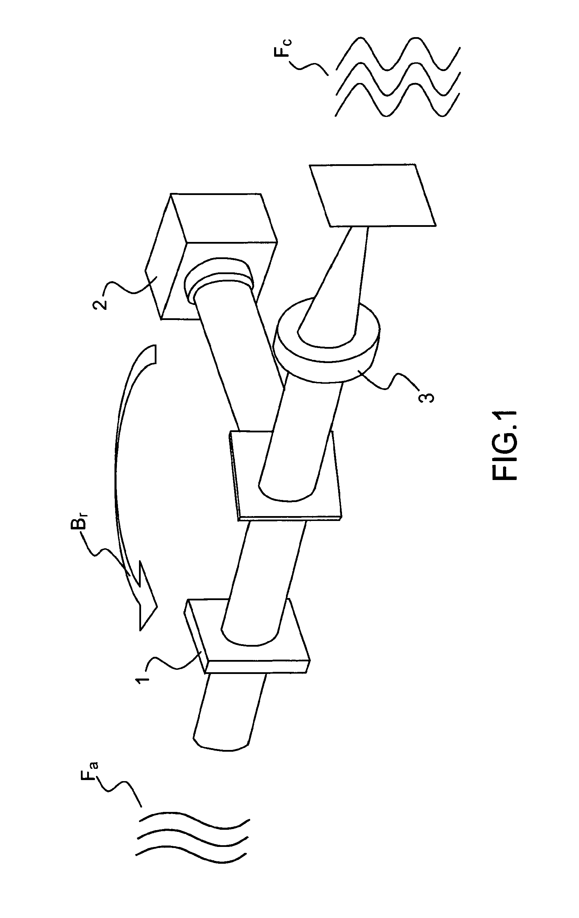

La figure 1 illustre un exemple de configuration de l'art connu utilisant un modulateur de phase 1 à base de cristal liquide permettant de corriger un faisceau laser Fa de certaines aberrations et ce au point focal d'une lentille 3. Ce dispositif comprend ainsi également des moyens de mesure de phase 2 et des moyens de rétroaction dans une boucle de rétroaction Br permettant de corriger ponctuellement la phase du faisceau incident pour en corriger les aberrations et fournir un faisceau corrigé Fc. La phase est directement liée à l'indice optique vu par un faisceau de lumière et ceci est directement exprimé dans la relation suivante :

$$\Phi = 2\,\pi\,n(\lambda)\,z\,/\,\lambda \text{ avec z la distance parcourue par le faisceau dans le milieu.}$$

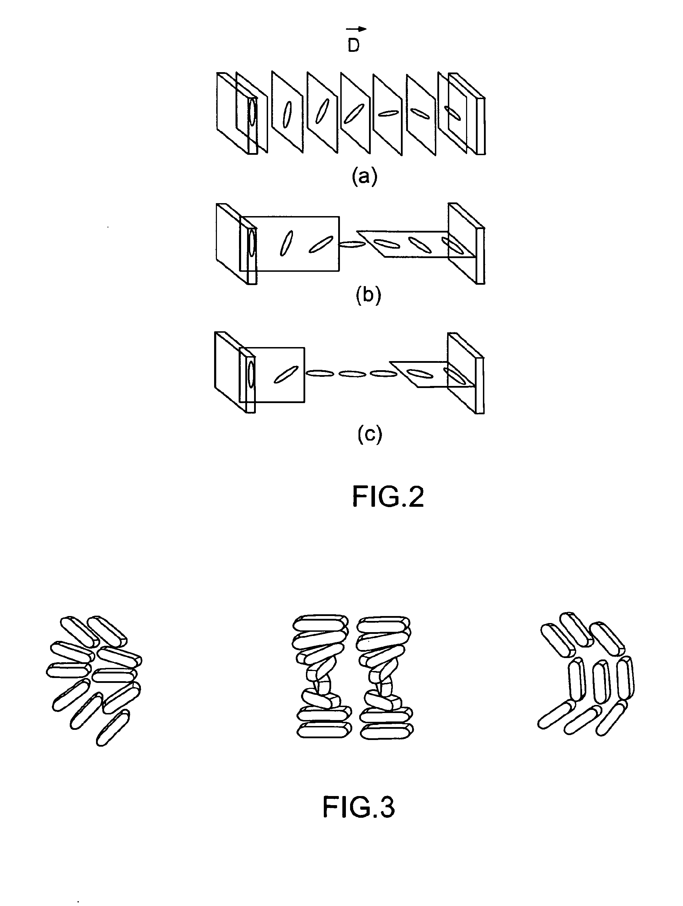

Une des caractéristiques principales des cellules à cristal liquide réside dans le fait qu'il est possible de faire changer l'indice optique du milieu par l'application d'un champ électrique. En effet, les molécules cristal liquide, notamment des molécules nématiques présentent un axe optique ordinaire et un axe optique extraordinaire respectivement le long du vecteur directeur D et perpendiculairement audit vecteur directeur D, tel que celui représenté en figure 2. Ces molécules peuvent être orientées sous l'action d'un champ électrique appliqué, les trois positions (a), (b) et (c) représentées en figure 2 sont respectivement relatives à un champ faible (en deçà du champ nécessaire pour pouvoir commencer à orienter les molécules), un champ moyen et un champ fort.

En changeant l'orientation desdites molécules, on est ainsi en mesure de faire varier l'indice optique moyen vu par un faisceau lumineux traversant le milieu. Généralement on utilise un nématique non twisté d'anisotropie diélectrique positive ou négative intégré dans une cellule comportant plus précisément un polariseur en entrée, deux substrats dont un, grâce à un état de surface préalable permet de contraindre les molécules dans un état initial.

Un tel dispositif fonctionne avec une lumière polarisée dans l'axe du directeur des cristaux liquides. Dans le cas d'une anisotropie diélectrique positive, la lumière en entrée du dispositif voit l'indice extraordinaire du cristal liquide quand le dispositif est au repos (tension nulle), et au fur et à mesure que le champ augmente, les molécules de cristal liquide se redressant, la lumière voit un indice intermédiaire entre l'indice ordinaire et extraordinaire. Pour modifier la phase d'une lumière non polarisée, il faut effectuer cette opération de déphasage sur les deux composantes du champ électrique, on peut pour cela soit superposer deux dispositifs comme décrit dans l'article : Polarization-independent liquid crystal phase modulator using a thin polymer-separated double-layered structure Yi-Hsin Lin, Hongwen Ren, Yung Hsun Wu, Zhibing Ge and Shin-Tson Wu : College of Optics and Photonics, University of Central Florida, Orlando, Florida 32816 et Yue Zhao and Jiyu Fang : Advanced Materials Processing and Analysis Center and Department of Mechanical, Materials, soit utiliser une lame quart d'onde et un miroir et ainsi faire passer la lumière deux fois dans le même dispositif agissant ainsi sur les deux composantes du champ électrique comme décrit dans l'article : Liquid-crystal phase modulator for unpolarized light de Gordon D. Love APPLIED OPTICS / Vol. 32, No. 13 / 1 May 1993.

Dans le premier cas, la superposition pose de gros problèmes de parallaxe et n'autorise donc pas la superposition de matrices à petits pixels. Dans le deuxième cas, l'utilisation d'un réflecteur dans le chemin optique en fait un dispositif à réflexion qui ne peut donc être intégré dans une optique classique (zoom optique pour imageur par exemple).

Il est par ailleurs connu des cellules cristal liquide de type cholestérique dans laquelle les molécules ne se disposent pas exactement parallèles les unes aux autres mais adoptent une configuration hélicoïdale. Un modulateur de phase utilisant un tel cristal liquide est divulgué dans l'application de brevet US 2007139586 qui représente la base du préambule de la revendication 1. Si on effectue une coupe de la structure suivant un plan perpendiculaire à l'axe z de la spirale, la distorsion des molécules dans le plan est analogue à celle d'un nématique mais la direction privilégiée d'orientation des molécules tourne lentement quand on se déplace suivant l'axe z. On obtient ainsi une structure périodique hélicoïdale le long de la direction z perpendiculaire au plan des couches. Selon la longueur d'onde d'illumination et le pas de l'hélice de telles structures peuvent se comporter partiellement en miroir si la condition suivante est vérifiée :

$$p = \lambda\,/n \text{ avec } \lambda \text{ la longueur d'onde de l'onde et n l'indice du milieu cristal liquide.}$$

De manière générale, les cristaux liquides de type cholestérique s'orientent spontanément dans une direction privilégiée n de l'espace qu'on appelle le directeur. Lorsqu'un champ électrique appliqué les a contraint dans une certaine orientation, les molécules ont tendance à revenir dans cet état en réponse à une déformation.

Une déformation peut se décomposer en trois distorsions. En effet, en réponse à une déformation, une molécule de cristal liquide subit un couple de forces qui a pour effet de s'y opposer de façon à revenir dans l'état où toutes les molécules sont alignées. De plus, lorsqu'on applique un champ électrique auxdites molécules, les molécules ont tendance à s'aligner parallèlement au champ à cause de la polarisation des molécules.

Il y a alors compétition entre l'effet d'alignement parallèlement au champ électrique et les propriétés élastiques du milieu. On peut considérer que les déformations élastiques de molécules de cristal liquide sont de trois types :

- la déformation en éventail ;
- la déformation en torsion ;
- la déformation en courbure dite en « twist » encore appelée flexion.

Ces trois types de déformation sont illustrées en figure 3.

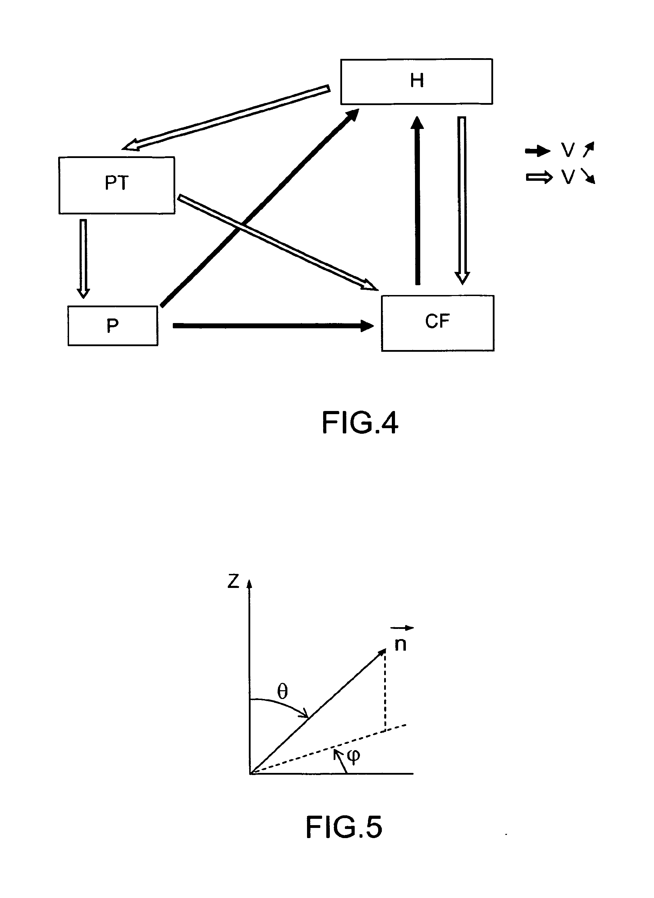

Le schéma de la figure 4 illustre l'existence des différents états possibles, lors de l'application d'un champ électrique et lors de la suppression progressive de l'application d'un champ électrique.

Plus précisément :

- l'état P dit « Planaire » correspond à un état dans lequel les molécules sont en hélice avec un axe vertical ;
- l'état CP dit « Conique focale » correspond à un état dans lequel pour des molécules de cristal liquide à anisotropie diélectrique positive, dans l'axe de l'hélice, on trouve un epsilon perpendiculaire inférieur à l'epsilon moyen de la direction perpendiculaire au plan des électrodes. Sous tension, l'hélice avant de se déformer tend à se coucher ;
- l'état H dit « Homéotropique » correspond à un état dans lequel toutes les molécules sont verticales en venant directement de l'état « Planaire » ou bien de l'état « Conique focale » dont le pas va progressivement augmenter jusqu'à se dérouler complètement ;
- l'état PT « planaire transitoire » correspond à un état «Planaire » dont le pas est supérieur au pas initial.

La transition « Planaire » / « Homéotropique » a été étudiée plus en détails. Les molécules de cristal liquide forment une structure hélicoïdale avec un axe d'hélice perpendiculaire au plan des couches. L'angle $\theta$ dit angle polaire que font les molécules avec cet axe tend à augmenter avec une diminution du champ électrique appliqué. Lorsque que cet angle est égal à $\pi/2$, les molécules sont dans une structure dite planaire.

Il est considéré dans cette approche que l'angle polaire $\theta$ est indépendant de l'axe z et que l'angle azimuthal $\varphi$ varie le long de l'axe z avec une constante q relative au vecteur d'onde de l'hélice, de manière à ce que le paramètre de « twist » soit constant, ces angles étant représentés en figure 5.

Les composantes du vecteur directeur n d'une molécule sont ainsi données par les formules suivantes :

$$n_x = \sin\theta\cos(qz), \quad n_y = \sin\theta\sin(qz) \quad \text{et} \quad n_z = \cos\theta$$

L'énergie libre est donnée par la formule suivante :

$$f = \tfrac{1}{2} K_{22} (q_0 - q\sin^2\theta)^2 + \tfrac{1}{2} K_{33}q^2\sin^2\theta\cos^2\theta + \tfrac{1}{2} \Delta\varepsilon\varepsilon_0 E^2\sin^2\theta$$

$q_0$ correspond à la constante à champ électrique nul ;

Le pas de l'hélice p étant égal à $\pi/q$.

Les constantes $K_{22}$ et $K_{33}$ correspondant aux constantes élastiques de torsion et de « twist ».

En utilisant les paramètres suivants :

$$K_3 = K_{33}/K_{22}, \quad \psi = f / K_{22}q_0^2, \quad \lambda = \frac{q}{q_0} \quad \text{et } e = E/E_c$$

avec

$$E_c = \frac{\pi^2}{2\,p_0}\left(\frac{K_{22}}{\varepsilon_0 \Delta\varepsilon}\right)^{1/2}$$

On a l'équation suivante :

.

$$\Psi = \tfrac{1}{2}\,(\,1 - \lambda\sin^2\theta)^2 + \tfrac{1}{2}\,K3\,\lambda^2\sin^2\theta\cos^2\theta + \tfrac{1}{2}\,(\pi/2\ e)^2\,\sin^2\theta$$

En cherchant à minimiser le paramètre $\psi$, on obtient :

$$\lambda = 1\ /\ (\sin^2\theta + K_3\cos^2\theta)$$

et

$$q = q_0\ /\ (\sin^2\theta + K_3\cos^2\theta)$$

Quand l'angle polaire $\theta$ est très faible, on peut considérer que :

$$q = q_0\ /\ K_3 = (K_{22}/K_{33})q_0$$

et donc le pas de l'hélice p = (K33/K22) p$_0$

Pour la plupart des cristaux liquides connus, le rapport $K_{33}/K_{22}$ est supérieur à 1 voire de l'ordre de 2. On obtient ainsi un pas de l'hélice de l'ordre de 2 fois le pas initial p$_0$ de l'hélice. Avec par ailleurs un angle polaire $\theta$ très faible, on peut obtenir l'équation suivante :

$$\psi = \frac{1}{2} + \frac{1}{2}\sin^2\theta\left[\left(\frac{\pi}{2}e\right)^2 - \frac{1}{K3 + (1-K3)\sin^2\theta}\right]$$

Pour analyser s'il est possible d'avoir un état stable dans une structure d'hélice conique, la dérivée seconde de la fonction $\psi$ est étudiée :

La dérivée seconde par rapport à l'angle $\theta$ (ou sin$^2\theta$) s'écrit :

$$\frac{\partial^2\psi}{\partial(\sin^2\theta)^2} = \frac{K_3(1-K_3)}{\left[K_3 + (1-K_3)\sin^2\theta\right]^2}$$

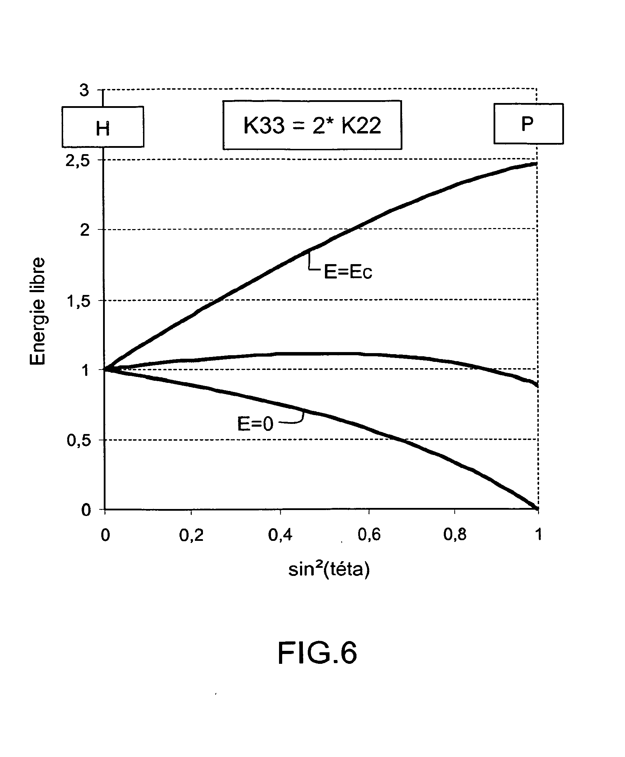

Et effectivement, si $K_{33} > K_{22}$, 1- $K_3$ est négatif quel que soit l'angle $\theta$ et donc l'énergie est une courbe à concavité vers le bas et ne présente pas de minimum donc d'état stable comme l'illustre la figure 6.

La demanderesse est ainsi partie de cette analyse pour proposer d'utiliser un cristal liquide possédant un coefficient $K_{22}$ supérieur à son coefficient $K_{33}$ de manière à générer un état stable dans une telle structure hélicoïdale et ce afin de permettre de disposer d'une structure exploitable en terme de modulation de phase et ainsi de pallier le problème de bi-stabilité rencontré actuellement avec les modulateurs à cristal liquide à structure hélicoïdale. Un tel cristal liquide est utilisé dans l'afficheur divulgué par l'application de brevet JP60086521.

Plus précisément la présente invention a pour objet un modulateur de phase de faisceau lumineux non polarisé émettant dans une gamme de longueur d'onde donnée, le modulateur comportant au moins une cellule contenant un cristal liquide possédant une structure hélicoïdale et des moyens pour appliquer une tension à ladite cellule afin de réaliser une modulation de phase du faisceau lumineux pénétrant dans ladite cellule, ledit cristal liquide possédant une constante élastique de torsion ($K_{22}$) supérieure à sa constante élastique de flexion ($K_{33}$) de manière à assurer des comportements stables continus en tension, ledit cristal liquide présentant un nombre de spires suffisant et dont l'axe des spires est dans la direction de propagation de la lumière permettant d'obtenir un effet optique engendré par le cristal liquide sur le champ électrique identique quelle que soit la direction de ce champ électrique, ladite cellule étant transparente dans ladite gamme de longueur d'onde.

Ainsi il n'est pas nécessaire comme dans l'art antérieur de superposer deux matrices, ni d'utiliser un réflecteur. L'utilisation d'un cristal liquide hélicoïdal avec un nombre de spires suffisant et dont l'axe des spires est dans la direction de propagation de la lumière permet d'obtenir un effet optique engendré par le cristal liquide sur le champ électrique identique quelque soit la direction de ce champ électrique. Ainsi, une lumière non polarisée subit sur ses deux composantes (d'un repère arbitraire) la même correction.

Selon une variante de l'invention, le cristal liquide est un cristal liquide cholestérique.

Selon une variante de l'invention, le cristal liquide est un mélange comportant un cristal liquide nématique et des molécules cholestériques.

Selon une variante de l'invention, le cristal liquide est un mélange de chlorure de cholesteryle et de myristate de cholesteryle.

Selon une variante de l'invention, l'épaisseur de la cellule et le pas de l'hélice sont calibrés pour générer au moins un tour d'hélice dans la structure hélicoïdale.

Selon une variante de l'invention, le modulateur comprend un agencement matriciel de cellules à cristal liquide de manière à constituer un modulateur spatial de lumière.

L'invention a aussi pour objet un dispositif optique caractérisé en ce qu'il comporte un modulateur de phase selon l'invention et une source émettrice destinée à être modulée par ledit modulateur de phase.

L'invention a encore pour objet une lentille à focale variable caractérisée en ce qu'elle comporte un dispositif optique comportant un modulateur de l'invention.

L'invention a aussi pour objet un zoom caractérisé en ce qu'il comporte au moins une lentille couplée à des moyens de déplacement et une lentille à focale variable selon la présente invention.

L'invention a enfin pour objet un dispositif de correction de front d'ondes d'un faisceau lumineux caractérisé en ce qu'il comporte un modulateur de phase selon l'invention, des moyens de mesure de phase en sortie dudit modulateur et des moyens de rétroaction agissant sur ledit modulateur de phase.

L'invention sera mieux comprise et d'autres avantages apparaîtront à la lecture de la description qui va suivre donnée à titre non limitatif et grâce aux figures annexées parmi lesquelles :

- la figure 1 illustre un exemple de dispositif de correction de front d'onde comportant un modulateur de phase selon l'art connu ;
- la figure 2 schématise l'orientation de molécules cristal liquide sous l'action d'un champ électrique ;
- la figure 3 illustre les différents types de déformation élastiques auxquelles sont soumises des molécules de cristal liquide ;
- la figure 4 illustre un schéma des différents états dans lequel peuvent être des molécules cholestériques ;
- la figure 5 illustre l'angle polaire et azimuthal d'une molécule cristal liquide ;
- la figure 6 illustre l'évolution de l'énergie libre en fonction de l'angle polaire θ pour des molécules cristal liquide comportant un coefficient $K_{22}$ inférieur au coefficient $K_{33}$, selon l'art connu ;
- la figure 7 l'évolution de l'énergie libre en fonction de l'angle polaire θ pour des molécules cristal liquide comportant un coefficient $K_{22}$ supérieur au coefficient $K_{33}$, selon l'invention ;
- la figure 8 illustre l'évolution de l'ellipticité induite sur une lumière polarisée rectiligne en entrée en fonction du nombre de tours d'hélice dans un modulateur spatial de l'invention.

De manière générale et selon l'invention, le modulateur de phase comporte au moins une cellule à cristal liquide fonctionnant en lumière non polarisée illuminé par un faisceau lumineux. Le cristal liquide présente un pas d'hélice calculé pour ne pas se comporter comme un miroir de Bragg dans la gamme de rayonnement concerné par l'application

Typiquement, pour un fonctionnement en lumière visible, on peut choisir un pas d'hélice supérieur à environ 0,5 μm.

Il comprend une cellule à cristal liquide comprenant au moins deux surfaces permettant d'appliquer une tension et avantageusement des traitements de surface permettant d'aider à la pré-orientation des molécules de cristal liquide.

Les molécules cristal liquide sont choisies capables de s'organiser en structure hélicoïdale avec un pas d'hélice variable selon le champ appliqué à ladite cellule. Il peut s'agir de cristal liquide pur ou de cristal liquide de type nématique, dont la structure hélicoïdale est conférée grâce à la présence de molécules cholestériques.

Le principe appliqué dans le modulateur de phase de l'invention est le suivant :

Une lumière traverse une cellule avec une structure de molécules organisées en hélice dite « sur-twistée » et suffisamment mince capable avec ou sans champ appliqué, de subir une variation de phase $\Delta\varphi = \Delta n\, d/\lambda\, \pi$ et ce en ne subissant pratiquement pas d'effet rotatoire de la lumière, voyant ainsi un indice moyen $n_{eff} = \frac{1}{2}(n_e + n_o)$, si ladite lumière voit un nombre de tours suffisant d'hélice.

L'épaisseur de la cellule est choisie de manière à permettre un fonctionnement en transmission proche de 100% et ce quel que soit l'angle d'incidence du faisceau lumineux à moduler en phase.

La cellule de cristal liquide comporte un cristal liquide présentant un coefficient $K_{22}$ supérieur à son coefficient $K_{33}$.

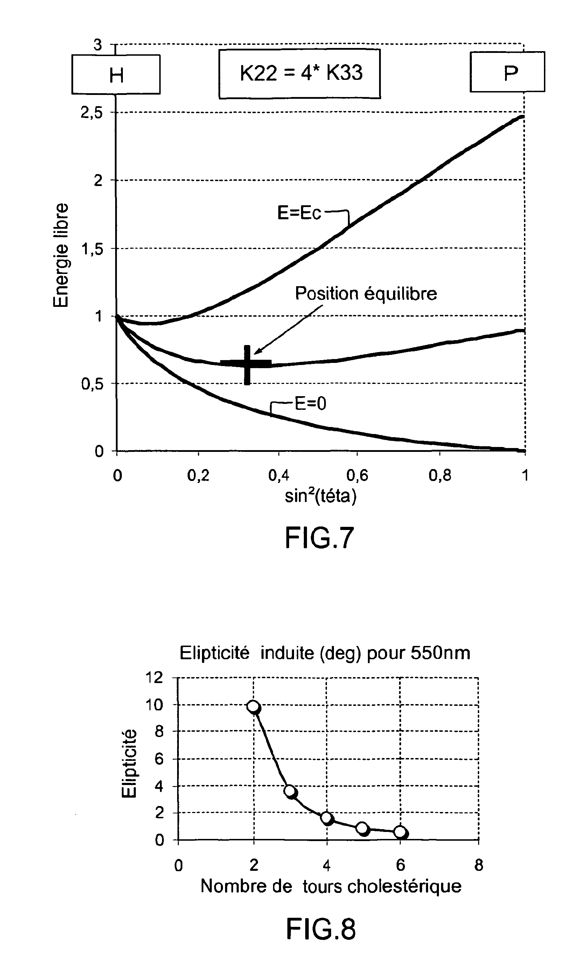

Typiquement avec la condition $K_{22} = 4 * K_{33}$, on obtient les courbes illustrées en figure 7 mettant ainsi bien en évidence une courbe avec puits de potentiel relatif à la présence d'un état stable.

Le retard réalisable est proportionnel à l'épaisseur de la cellule. Quand l'épaisseur augmente, l'ellipticité induite diminue. Par contre, une tension d'adressage plus importante est nécessaire. Une méthode pour augmenter la plage de variation de phase ou de retard est d'augmenter le taux dit de « sur-twist » en utilisant un pas d'hélice adapté.

Typiquement avec une cellule $12\pi$ d'épaisseur de $8\mu m$, la lumière traversante rencontre 6 tours complets d'hélice. Ceci peut être obtenu avec un pas de structure cholestérique compris entre environ $1{,}23\ \mu m$ et $1{,}45\ \mu m$, les surfaces d'électrodes comportant par ailleurs de manière classique des traitements de surface permettant par frottement d'influencer les orientations préalables des molécules aux abords desdites surfaces.

En passant d'une tension de 0 Volt à une tension appliquée de 20 Volts on est ainsi en mesure de réaliser des déphases de $2\pi$ pour un dn eff de 0.1 et une longueur d'onde de $0.8\mu m$.

Il existe néanmoins un optimum entre le nombre de tours que doit voir la lumière et la tension à appliquer à la cellule. En effet, plus le nombre de tours d'hélice est élevé plus la tension à appliquer est élevée mais meilleure est l'ellipticité.

La demanderesse a ainsi pu mettre en évidence ce constat illustré en figure 8 pour une cellule balayée à 550 nm.

La cellule de cristal liquide comporte un cristal liquide présentant un coefficient $K_{22}$ supérieur à son coefficient $K_{33}$.

Exemple de modulateur matriciel de phase fonctionnant dans le visible

Le modulateur comporte de manière classique une matrice de pixels adressables par une matrice de commande de manière à pouvoir réaliser une matrice de modulation de phase. Typiquement les pixels ont des dimensions de $50\mu m$ par $50\mu m$, l'ensemble faisant quelques millimètres. Les électrodes sont organisées de manière classique en lignes et colonnes. Avantageusement, les pixels sont commandés par un transistor et constituent une matrice active.

Les cellules cristal liquide comportent un cristal liquide de type cholestérique, comprenant par exemple un mélange de cristal liquide de chlorure de cholesteryle et de myristate de cholesteryle dans les proportions 1,75 pour 1 et possédant ainsi un coefficient $k_{22}$ supérieur à son coefficient $K_{33}$. L'épaisseur des cellules est de l'ordre de 8 $\mu m$.

Un tel modulateur de phase peut avantageusement être intégré en tant que lentille dans un petit zoom.

**Revendications**

1.   Modulateur de phase de faisceau lumineux non polarisé émettant dans une gamme de longueur d'onde donnée, le modulateur comportant au moins une cellule contenant un cristal liquide possédant une structure hélicoïdale et des moyens pour appliquer une tension à ladite cellule afin de réaliser une modulation de phase du faisceau lumineux pénétrant dans ladite cellule, ledit cristal liquide présentant un nombre de spires suffisant et dont l'axe des spires est dans la direction de propagation de la lumière permettant d'obtenir un effet optique engendré par le cristal liquide sur le champ électrique identique quelle que soit la direction de ce champ électrique, ladite cellule étant transparente dans ladite gamme de longueur d'onde et comportant des comportements stables continus en tension, **caractérisé en ce que** ledit cristal liquide possède une constante élastique de torsion ($K_{22}$) supérieure à sa constante élastique de flexion ($K_{33}$).

2.   Modulateur de phase selon la revendication 1, **caractérisé en ce que** le cristal liquide est un cristal liquide cholestérique.

3.   Modulateur de phase selon la revendication 1, **caractérisé en ce que** le cristal liquide est un mélange comportant un cristal liquide nématique et des molécules cholestériques.

4. Modulateur de phase selon la revendication 1, **caractérisé en ce que** le cristal liquide est un mélange de chlorure de cholesteryle et de myristate de cholesteryle.

5. Modulateur de phase selon l'une des revendications 1 à 4, **caractérisé en ce que** l'épaisseur de la cellule et le pas de l'hélice sont calibrés pour générer au moins un tour d'hélice dans la structure hélicoïdale

6. Modulateur de phase selon l'une des revendications 1 à 5, **caractérisé en ce qu'**il comprend un agencement matriciel de cellules à cristal liquide de manière à constituer un modulateur spatial de lumière.

7. Dispositif optique **caractérisé en ce qu'**il comporte un modulateur de phase selon l'une des revendications 1 à 6 et une source émettrice destinée à être modulée par ledit modulateur de phase.

8. Lentille à focale variable **caractérisée en ce qu'**elle comporte un dispositif optique selon la revendication 7.

9. Zoom **caractérisé en ce qu'**il comporte au moins une lentille couplée à des moyens de déplacement et une lentille à focale variable selon la revendication 8.

10. Dispositif de correction de front d'ondes d'un faisceau lumineux **caractérisé en ce qu'**il comporte un modulateur de phase selon la revendication 6, des moyens de mesure de phase en sortie dudit modulateur et des moyens de rétroaction agissant sur ledit modulateur de phase.


**Patentansprüche**

1. Phasenmodulator eines nicht polarisierten Lichtstrahls, der in einem bestimmten Wellenlängenbereich sendet, wobei der Modulator mindestens eine Zelle, die einen Flüssigkristall enthält, der eine spiralförmige Struktur besitzt, und Mittel, um eine Spannung auf die Zelle anzuwenden, aufweist, um eine Phasenmodulation des Lichtstrahls durchzuführen, die in die Zelle eindringt, wobei der Flüssigkristall eine ausreichende Windungsanzahl aufweist und dessen Windungsachse in der Ausbreitungsrichtung des Lichts ist, wodurch ein von dem Flüssigkristall erzeugter optischer Effekt auf das elektrische Feld erhalten wird, der unabhängig von der Richtung dieses elektrischen Felds identisch ist, wobei die Zelle in dem Wellenlängenbereich transparent ist, und kontinuierlich stabile Verhaltensweisen der Spannung aufweist, **dadurch gekennzeichnet, dass** der Flüssigkristall eine elastische Torsionskonstante ($K_{22}$) besitzt, die größer als seine elastische Flexionskonstante ($K_{33}$) ist.

2. Phasenmodulator nach Anspruch 1, **dadurch gekennzeichnet, dass** der Flüssigkristall ein cholesterischer Flüssigkristall ist.

3. Phasenmodulator nach Anspruch 1, **dadurch gekennzeichnet, dass** der Flüssigkristall ein Gemisch ist, das einen nematischen Flüssigkristall und cholesterische Moleküle aufweist.

4. Phasenmodulator nach Anspruch 1, **dadurch gekennzeichnet, dass** der Flüssigkristall ein Gemisch aus Cholesterylchlorid und Cholesterylmyristat ist.

5. Phasenmodulator nach einem der Ansprüche 1 bis 4, **dadurch gekennzeichnet, dass** die Dicke der Zelle und der Schraubengang kalibriert sind, um in der spiralförmigen Struktur mindestens eine Schraubenumdrehung zu erzeugen.

6. Phasenmodulator nach einem der Ansprüche 1 bis 5, **dadurch gekennzeichnet, dass** er eine Matrixanordnung von Zellen mit Flüssigkristall umfasst, so dass ein räumlicher Lichtmodulator gebildet wird.

7. Optische Vorrichtung, **dadurch gekennzeichnet, dass** sie einen Phasenmodulator nach einem der Ansprüche 1 bis 6 und eine sendende Quelle umfasst, die bestimmt ist, von dem Phasenmodulator moduliert zu sein.

8. Linse mit variabler Brennweite, **dadurch gekennzeichnet, dass** sie eine optische Vorrichtung nach Anspruch 7 aufweist.

9. Zoom, **dadurch gekennzeichnet, dass** er mindestens eine Linse aufweist, die an Verlagerungsmittel gekoppelt ist, und eine Linse mit variabler Brennweite nach Anspruch 8.

10. Vorrichtung zur Korrektur einer Wellenfront eines Lichtstrahls, **dadurch gekennzeichnet, dass** sie einen Phasenmodulator nach Anspruch 6, Mittel zum Messen der Phase am Ausgang des Modulators und rückwirkende Mittel, die auf den Phasenmodulator einwirken, aufweist.

**Claims**

1. A non-polarised light beam phase modulator emitting within a given wavelength range, said modulator comprising at least one cell containing a liquid crystal having a helical structure and means for applying a voltage to said cell so as to carry out a phase modulation of the light beam penetrating said cell, said liquid crystal having a sufficient number of spires and in which the axis of the spires is in the direction of propagation of the light, allowing an optical effect to be obtained that is generated by the liquid crystal on the electric field that is identical regardless of the direction of this electric field, said cell being transparent in said wavelength range and comprising stable continuous voltage behaviour, **characterised in that** said liquid crystal has a torsion elastic constant ($K_{22}$) greater than its bending elastic constant ($K_{33}$).

2. The phase modulator according to claim 1, **characterised in that** said liquid crystal is a cholesteric liquid-crystal.

3. The phase modulator according to claim 1, **characterised in that** said liquid crystal is a mixture comprising a nematic liquid crystal and cholesteric molecules.

4. The phase modulator according to claim 1, **characterised in that** said liquid crystal is a mixture of cholesteryle chloride and of cholesteryle myristate.

5. The phase modulator according to any one of claims 1 to 4, **characterised in that** the thickness of said cell and the pitch of the helix are calibrated so as to generate at least one helical turn in said helical structure.

6. The phase modulator according to any one of claims 1 to 5, **characterised in that** it comprises a matrix arrangement of liquid crystal cells so as to constitute a spatial light modulator.

7. An optical device, **characterised in that** it comprises a phase modulator according to any one of claims 1 to 6 and an emitting source designed to be modulated by said phase modulator.

8. A variable focus lens, **characterised in that** it comprises an optical device according to claim 7.

9. A zoom, **characterised in that** it comprises at least one lens coupled to displacement means and one variable focus lens according to claim 8.

10. A device for correcting wave fronts of a light beam, **characterised in that** it comprises a phase modulator according to claim 6, means for measuring the phase at the output of said modulator and feedback means acting on said phase modulator.

$F_c$

$B_r$

2

3

1

$F_a$

FIG.1

$\vec{D}$

(a)

(b)

(c)

# FIG.2

# FIG.3

FIG.4

FIG.5

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007139586 A

- JP 60086521 B

**Littérature non-brevet citée dans la description**

- **YI-HSIN LIN ; HONGWEN REN ; YUNG HSUN WU ; ZHIBING GE ; SHIN-TSON WU.** *College of Optics and Photonics, University of Central Florida*

- **YUE ZHAO ; JIYU FANG.** *Advanced Materials Processing and Analysis Center and Department of Mechanical, Materials*
- **GORDON D. LOVE.** *APPLIED OPTICS,* 01 Mai 1993, vol. 32 (13